(19) **Europäisches Patentamt / European Patent Office / Office européen des brevets**

(11) **EP 3 640 887 A1**

(12) **EUROPEAN PATENT APPLICATION**
published in accordance with Art. 153(4) EPC

(43) Date of publication:
**22.04.2020 Bulletin 2020/17**

(21) Application number: **17914065.2**

(22) Date of filing: **21.12.2017**

(51) Int Cl.:
*G06T 7/00* (2017.01)     *G01C 11/06* (2006.01)
*G06T 7/246* (2017.01)     *H04N 5/232* (2006.01)

(86) International application number:
**PCT/JP2017/045949**

(87) International publication number:
**WO 2018/230016 (20.12.2018 Gazette 2018/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **13.06.2017 JP 2017115833**

(71) Applicant: IHI Corporation
**Tokyo 135-8710 (JP)**

(72) Inventors:
• **HU Jingyu**
  **Tokyo 135-8710 (JP)**
• **NAKAJIMA Tadahiro**
  **Tokyo 135-8710 (JP)**
• **BANNO Hajime**
  **Tokyo 135-8710 (JP)**
• **SONODA Shinichirou**
  **Tokyo 135-8710 (JP)**

(74) Representative: **MERH-IP Matias Erny Reichl Hoffmann**
**Patentanwälte PartG mbB**
**Paul-Heyse-Strasse 29**
**80336 München (DE)**

(54) **MOBILE BODY OBSERVATION METHOD**

(57)     A moving body observation method includes acquiring time-series images Fn taken at a predetermined time interval (Step S10), obtaining an estimated position $L_n$ of a moving body P in the time-series image Fn based on an estimated motion of the moving body P (Step S20), extracting an image including the estimated position $L_n$ of the moving body P from images of the time-series images Fn, as an extracted image $Q_n$ (Step S30), generating a template image $Q_T$ by stacking the extracted images $Q_n$ in such a manner that reference points of the moving body P in the extracted images coincide with each other (Step S40), and identifying a position Lsn of the moving body P in each of the time-series images Fn by performing template matching using the template image $Q_T$ for at least one of the time-series images Fn(Step S50).

FIG. 3

**Description**

TECHNICAL FIELD

The present disclosure relates to an observation method for a moving body affected by fluctuation or the like.

BACKGROUND ART

Conventionally, when an image of an object (hereinafter, "moving body") that moves under a predetermined physical law (for example, at a constant velocity) is taken as an observation object by a device such as a CCD camera, it is difficult to find the moving body because the moving body is buried in background noise, for example, if the moving body is at a far distance or is small, or if brightness of the moving body is weak. Particularly, because the velocity of the moving body is unknown, it is impossible to change the orientation of the camera in accordance with the moving body even if long exposure is performed. Therefore, a motion blur of the moving body occurs in a field of view, so that the image of the moving body cannot be taken.

Against the above problem, Patent Literature 1 proposes a moving body detection method that removes noise by using images acquired in time series. This method uses a number of images taken at a constant interval and performs the following processes for every sequence of consecutive images. (a) Assuming that a moving body performs a uniform velocity motion at a certain velocity, images are shifted at an assumed velocity and are stacked on each other, a slightly bright portion that is common to data at the same position is found, and an S/N ratio (a noise-to-signal ratio) is improved. (b) The assumed velocity is changed over the entire expected velocity range of the moving body, and the process (a) described above is repeated. A velocity and a position at which a bright point is found is acquired as a detection result. (c) From the results obtained by the processes (a) and (b) for every image sequence, those that are consistent with each other (for which the positions and the velocities are not discontinuous) are integrated as the same moving body.

CITATION LIST

PATENT LITERATURE

Patent Literature 1: Japanese Patent Application Laid-open No. 2014-51211

SUMMARY OF INVENTION

TECHNICAL PROBLEM

The moving body detection method in Patent Literature 1 described above uses a so-called stacking method, and can detect the position of a moving body by using a number of images. However, this method cannot recognize the locus or the behavior of the moving body. For example, even if N images are used in the stacking method, only the position of the moving body in an n-th (n<N) image can be detected, and the position of the moving body in each of the remaining (N-1) images cannot be detected. Therefore, use of the stacking method only provides very sparse information in terms of time.

The present disclosure has been made in viewof the problems described above, and it is an object of the present disclosure to provide a moving body observation method that can accurately detect a moving body by using a stacking method.

SOLUTION TO PROBLEM

An aspect of the present disclosure is a moving body observation method comprising: acquiring time-series images taken at a predetermined time interval; obtaining an estimated position of a moving body in the time-series images based on an estimated motion of the moving body; extracting images each including the estimated position of the moving body from a plurality of images of the time-series images, as an extracted image; generating a template image by stacking the extracted images in such a manner that reference points of the moving body in the extracted images coincide with each other; and identifying a position of the moving body in at least one image of the time-series images performing template matching using the template image for the at least one image of the time-series images.

Each of the reference points of the moving body in stacking of the extracted images may be the estimated position of the moving body.

Each pixel value in the template image may be set to any one of an average pixel value, a median, and a mode of a corresponding pixel in the extracted images.

The moving body observation method may further comprise binarizing each pixel value in the time-series images or the extracted images; and calculating a center of gravity of the moving body in each of the binarized time-series images or each of the binarized extracted images. In this case, each of the reference points of the moving body in stacking of the extracted images may be the center of gravity of the moving body.

The moving body observation method may further comprise binarizing each pixel value in the time-series images or the extracted images; and calculating a maximum-brightness position of the moving body by fitting a normal function to two one-dimensional distributions obtained by integrating a pixel distribution of the moving body in each of the binarized extracted images in predetermined two directions. In this case, each of the reference points of the moving body in stacking of the extracted images may be the maximum-brightness position of the moving body.

The moving body may be debris on an earth orbit or a microorganism in a liquid.

ADVANTAGEOUS EFFECTS OF INVENTION

According to the present disclosure, it is possible to provide a moving body observation method that can accurately detect a moving body by using a stacking method.

BRIEF DESCRIPTION OF DRAWINGS

[Fig. 1] Fig. 1 is a block diagram of a moving body observation device according to an embodiment of the present disclosure.
[Fig. 2] Fig. 2 is a flowchart of a moving body observation method according to the embodiment.
[Fig. 3] Fig. 3 is an explanatory diagram of each step of the moving body observation method according to the embodiment.
[Figs. 4] Figs. 4 are respectively an example of an intensity distribution in an image obtained by the moving body observation method according to the embodiment, where Fig. 4 (a) illustrates an intensity distribution in an extracted image, and Fig. 4(b) illustrates an intensity distribution in a template image $Q_T$.
[Fig. 5] Fig. 5 is a flowchart according to a first modification of the embodiment.
[Fig. 6] Fig. 6 is a flowchart according to a second modification of the embodiment.

DESCRIPTION OF EMBODIMENTS

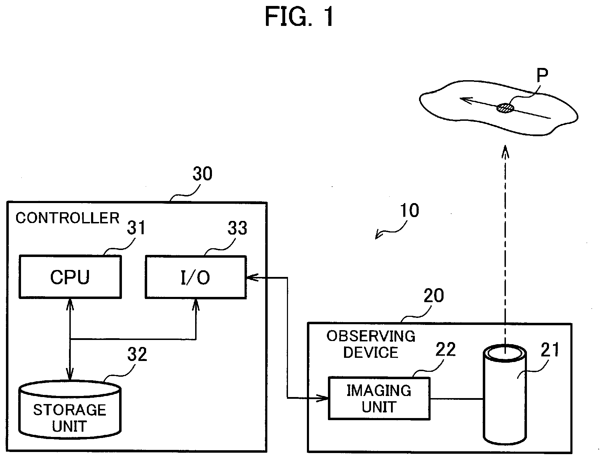

An embodiment of the present disclosure will be described below with reference to the accompanying drawings. Fig. 1 is a block diagram of a moving body observation device according to the present embodiment. As illustrated in Fig. 1, a moving body observation device 10 includes an observing device 20 and a controller 30. The observing device 20 includes an optical system 21 and an imaging unit 22. The optical system 21 forms an optical image including a moving body P that is an observation object, and is a telescope or a microscope, for example. The imaging unit 22 acquires the optical image generated by the optical system 21 as image data, and is a CCD camera, for example. The controller 30 includes a CPU (a processor) 31, a storage unit 32, and an input/output unit (I/O) 33. The CPU 31 performs various types of calculation using a program and data stored in the storage unit 32, for example. The storage unit 32 stores therein a program according to the present embodiment and various types of data, and is configured by a semiconductor memory, a hard disk drive (HDD), or the like. For example, the storage unit 32 also stores therein image data sent from the observing device 20. The input/output unit 33 performs communication of data, an instruction, and the like with an external device, and is connected to the imaging unit 22 of the observing device 20 in the present embodiment. Therefore, image data acquired by the imaging unit 22 is stored in the storage unit 32 via communication between the imaging unit 22 and the input/output unit 33 and is used for calculation by the CPU 31.

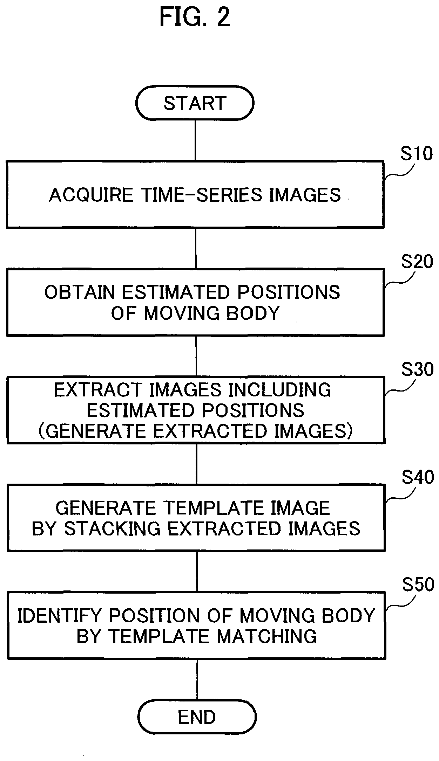

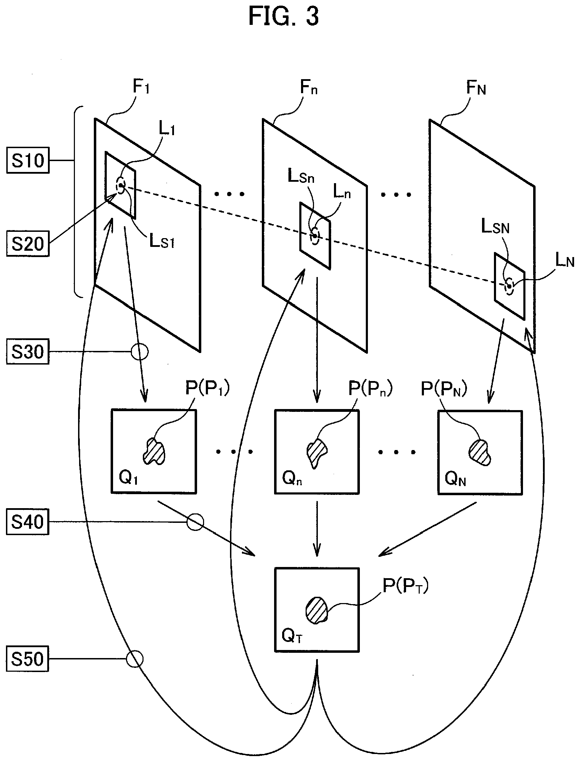

Fig. 2 is a flowchart of a moving body observation method according to the present embodiment. Fig. 3 is an explanatory diagram of each step of the moving body observation method according to the present embodiment. As illustrated in Figs. 2 and 3, the moving body observation method according to the present embodiment includes an image acquiring step (Step S10), a position estimating step (Step S20), an image extracting step (Step S30), a template generating step (StepS40), and a position identifying step (Step S50).

The moving body P that is an observation object is debris on the earth orbit, for example. On the earth orbit, there are orbiting artificial satellites with various purposes, for example, a military satellite, a communications satellite, a science satellite, an observation satellite, and a navigation satellite. When these artificial satellites become no longer functional because of a failure, or finish their roles and end their service life, they are left on the orbit as they are to become debris (also referred to as "space dust " or "space debris") that move on the orbit in many cases. Further, remains of rockets or the like used for launching artificial satellites or the like is also left on the orbit as debris.

Currently, the number of debris that is orbiting the earth reaches several thousands or more, and enters a self-multiplying stage in which the number of debris is increased by natural collision. It is likely that this debris collides with an artificial satellite that is being used when the satellite is orbiting or an artificial satellite that is being launched, and therefore an observation method with high accuracy is required.

The observation object in the present embodiment is not limited to the debris described above. That is, the moving body observation method can be applied to an object with fluctuation of a shape in images acquired at a predetermined time interval as the observation object. Therefore, the moving body P may be a microorganism in a liquid such as a chemical agent (for example, a still microorganism). In this case, a microscope is used as the optical system 21. The fluctuation is caused because a moving body is at a far distance, the size of the moving body is small, or the brightness of the moving body is weak, for example.

The image acquiring step (Step S10) acquires multiple (for example, N) time-series images $F_n$ (n=1 to N) including the moving body P, which are taken at a predetermined time interval. In the present embodiment, the observing device 20 of the moving body observation device 10 takes multiple (for example, N) images including the moving body P at a predetermined time interval, and inputs image data of those images to the controller 30 (the storage unit 32) of the moving body observation device 10 as time-series images $F_1$ to $F_N$.

After each time-series image $F_n$ is acquired, a process of removing a bright pixel, such as a star, which may cause false detection, may be performed for each time-series image $F_n$. For example, it is possible to remove a noise component of a star included in an image signal by translating the images in accordance with a moving direction and a moving amount of the star, stacking the images on each other, and subtracting pixel values of the same pixels that are stacked.

The position estimating step (Step S20) obtains estimated positions $L_n$ (n=1 to N) of the moving body P in the time-series images $F_n$ (n=1 to N) based on an estimated motion of the moving body P. For example, assuming that the motion of the moving body P is a uniform linear motion, the estimated motion can be represented by the following formula 1.

$$\begin{cases} PosX(k) = PosX(n) + (k-n) \times VelX \\ PosY(k) = PosY(n) + (k-n) \times VelY \end{cases} \cdots \text{(Formula 1)}$$

Here, PosX(k) represents an X coordinate of an estimated position $L_k$ of the moving body P in a time-series image $F_k$ (a frame number k), PosY(k) represents a Y coordinate of the estimated position $L_k$ of the moving body P in the time-series image $F_k$, VelX represents an X-direction component of a velocity of the moving body P in the time-series image $F_n$, VelY represents a Y-direction component of the velocity of the moving body P in the time-series image $F_n$, and k represents a positive integer that is equal to or less than N and is not n. PosX(n) and PosY(n) are an X coordinate and a Y coordinate of the estimated position $L_n$ of the moving body P in the time-series image $F_n$, respectively, and are selected from any one of the acquired time-series images. The estimated position $L_n$ may be referred to from an observation history of the moving body P stored in the storage unit 32 or may be calculated again together with an estimated moving velocity of the moving body P. In the latter case, for example, while the estimated moving velocity of the moving body P is sequentially changed in a range of (-VelX, -VelY) to (VelX, VelY), the images are stacked on each other. A velocity at a time when the degree of coincidence between candidates of the moving body P in the images is high is set as the estimated moving velocity, and the candidates are set as the moving body P.

Assuming that the moving body P performs a circular motion, its estimated motion is represented by the following formula 2 or 3. These circular motions each represent a circular orbit with a small radius of curvature that can be approximated by a line in either of the X direction and the Y direction. Here, A represents an X coordinate of the center of the circular orbit described above, and B represents a Y coordinate of the center of the circular orbit described above. Formula 2 represents a case where VelX ≤ VelY and Formula 3 represents a case where VelX > VelY.

$$\begin{cases} PosX(k) = PosX(n) + (k-n) \times VelX \\ PosY(k) = PosY(n) + (k-n) \times VelX \times (PosX(k-1) - A)/(PosY(k-1) - B) \end{cases}$$

$$\cdots \text{(Formula 2)}$$

$$\begin{cases} PosX(k) = PosX(n) + (k-n) \times VelY \times (PosY(k-1) - B)/(PosX(k-1) - A) \\ PosY(k) = PosY(n) + VelY \end{cases}$$

$$\cdots \text{(Formula 3)}$$

The estimated motion of the moving body P is not limited to the uniform linear motion or the circular motion described above, and can be changed to any motion to correspond to an observation object.

The image extracting step (Step S30) extracts (trims) an image that includes the estimated position $L_n$ of the moving body P from the time-series images $F_n$ (n=1 to N) as an extracted image $Q_n$. The extracted image $Q_n$ can have any size as long as it is smaller than the size of the time-series images $F_n$. The number of the time-series images $F_n$ that are objects of extraction is any plural number. As this number is increased, reliability of the shape of the moving body P in a template image $Q_T$ described later is increased. On the other hand, as this number is increased, a processing rate of the controller 30 is lowered. Therefore, it is desirable that the number of the time-series images used for extraction is an appropriate value determined by considering these circumstances . In the present embodiment, for convenience of description, the extracted image $Q_n$ is supposed to be extracted from all the acquired N images.

The template generating step (Step S40) generates the template image $Q_T$ by stacking (superposing) extracted images $Q_n$ in such a manner that reference points of the moving body P coincide with each other. Each reference point is the estimated position $L_n$ on the extracted image $Q_n$, for example. The estimated position $L_n$ has been already acquired in the position estimating step (Step S20). Therefore, the controller 30 can generate the template image $Q_T$ without newly performing a calculation process . The template image QT is generated by calculating average values of pixel values of the respective extracted images $Q_n$. For example, in a case where the extracted image $Q_n$ has a size of $M_x \times M_y$, each pixel value T(i, j) in the template image $Q_T$ is calculated by following Formula 4.

$$T(i,j) = \frac{\sum_{n=1}^{N} T_{Qn}(i,j)}{N} \ (i = 1 \sim M_x, j = 1 \sim M_y)$$

$$\cdots (\text{Formula } 4)$$

Here, $T_{Qn}(i, j)$ is a pixel value at a position (i, j) in the extracted image $Q_n$. That is, an intensity distribution of pixels that represent the moving body P in the template image $Q_T$ (that is, a moving body $P_T$) is an average of intensity distributions of pixels that represent the moving body P in extracted images $Q_1$ to $Q_N$ (that is, moving bodies $P_1$ to $P_N$).

As illustrated in Fig. 3, the shapes of the moving bodies $P_1$ to $P_N$ in the extracted images $Q_1$ to $Q_N$ always change by being affected by fluctuation caused by the atmosphere or the like. The template image $Q_T$ represents a state where such a shape change is suppressed. That is, the moving body $P_T$ in the template image $Q_T$ has an "average" shape obtained from the moving bodies $P_1$ to $P_N$ in the extracted images $Q_1$ to $Q_N$. For example, individual shape changes that appear in the extracted images $Q_1$ to $Q_N$ are averaged in the template image $Q_T$ to appear as "blur" that has a low intensity in the profile of the moving body $P_T$. Meanwhile, the shape common to the moving bodies $P_1$ to $P_N$ remain in the template image $Q_T$ as it is. In other words, the moving body $P_T$ includes a bright portion that represents the shape common to the moving bodies $P_1$ to $P_N$ and a dark portion that represents the shape that is not common to the moving bodies $P_1$ to $P_N$. Therefore, the moving body $P_T$ can have a shape close to an original shape of the moving body P, so that the template image $Q_T$ has high reliability as a template.

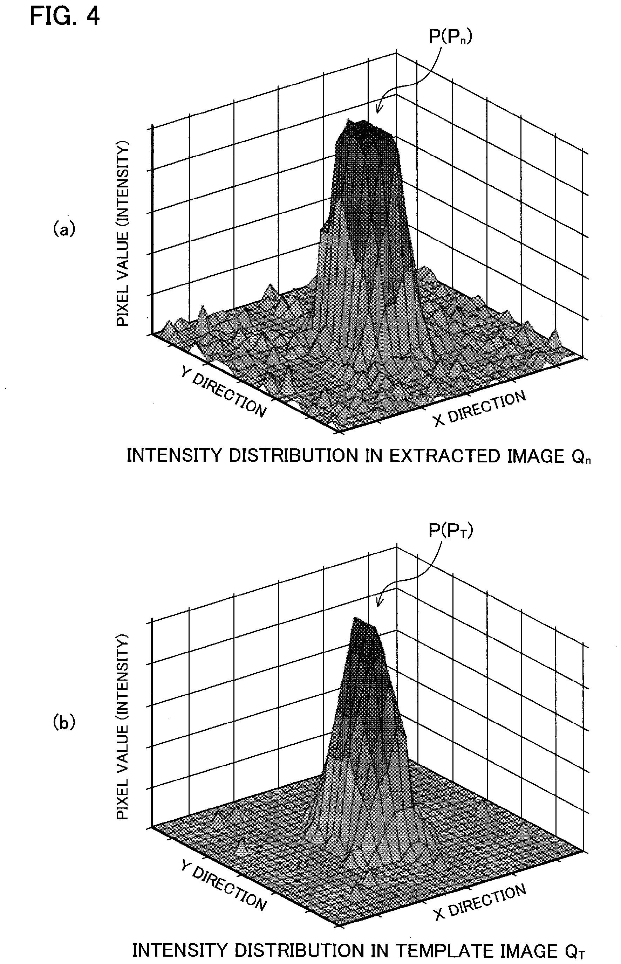

As described above, each pixel value in the template image $Q_T$ is an average value of pixel values in the extracted images $Q_1$ to $Q_N$. Therefore, random noise that appears in each of the extracted images $Q_1$ to $Q_N$ is reduced in the template image $Q_T$, so that an S/N ratio (a signal-to-noise ratio) is improved. Fig. 4(a) illustrates an intensity distribution in an extracted image $Q_n$, and Fig. 4(b) illustrates an intensity distribution in the template image $Q_T$. High-intensity portions that are observed at the centers of the intensity distributions in Figs. 4 (a) and 4 (b) represent a moving body $P_n$ and the moving body $P_T$, respectively. As illustrated in Fig. 4(a), random noise appears around the moving body $P_n$. Meanwhile, as illustrated in Fig. 4(b), the random noise observed in Fig. 4(a) is significantly reduced around the moving body $P_T$. Further, because of reduction of the random noise, a variation in intensities that represent the profile of the moving body $P_T$ is reduced as compared with that in intensities that represent the profile of the moving body $P_n$. This reduction also contributes to high reliability as a template.

The position identifying step (Step S50) identifies the position of the moving body P in the time-series image to which the template matching is applied by performing template matching using the templates image $Q_T$ for at least one of the time-series images $F_1$ to $F_N$. This template matching is performed around the estimated position $L_n$ (in a predetermined region including the estimated position $L_n$) obtained in the position estimating step (Step S20). The image to which the template matching is applied may be the extracted image $Q_n$ or an image including the estimated position $L_n$ which is newly extracted (trimmed) from the time-series images $F_n$. In both cases, pixel values that represent the moving body P ($P_n$) and its surrounding area are the same, and therefore the same result is obtained. In the following description, it is assumed that the time-series image $F_n$ is used as the image to which the template matching is applied for convenience of descriptions.

In template matching, the degree of similarity between the template image $Q_T$ and the time-series image $F_n$ can be evaluated by a value of zero-mean normalized cross correlation $R_{ZNCC}$ represented by Formula 5, for example. An average pixel value in the template image $Q_T$ in Formula 5 is obtained by Formula 6, and an average pixel value in the time-series image $F_n$ (or an image extracted for template matching) is obtained by Formula 7.

$$R_{ZNCC} = \frac{\sum_{j=0}^{My-1}\sum_{i=0}^{Mx-1}\{(I(i,j)-\bar{I})(T(i,j)-\bar{T})\}}{\sqrt{\sum_{j=0}^{Ny-1}\sum_{i=0}^{Nx-1}(I(i,j)-\bar{I})^2 \times \sum_{j=0}^{My-1}\sum_{i=0}^{Mx-1}(T(i,j)-\bar{T})^2}}$$

$\cdots$ (Formula 5)

$$\bar{T} = \frac{\sum_{j=0}^{My-1}\sum_{i=0}^{Mx-1}T(i,j)}{M_x M_y}$$

$\cdots$ (Formula 6)

$$\bar{I} = \frac{\sum_{j=0}^{Ny-1}\sum_{i=0}^{Nx-1}I(i,j)}{N_x N_y}$$

$\cdots$ (Formula 7)

Here, $M_x$ and $M_y$ are the numbers of pixels that respectively represent the width and the height of the template image $Q_T$. $N_x$ and $N_y$ are the numbers of pixels that respectively represent the width and the height of the time-series image $F_n$. (i, j) is coordinates in each image (where $0 \leq i \leq M_x-1$, $0 \leq j \leq M_y-1$). T(i, j) is a pixel value (an intensity, a brightness value) in the template image $Q_T$. T⁻ (in the formulae, T and a macron (a bar) above T) is an average pixel value (an average intensity, an average brightness value) in the template image $Q_T$. I(i, j) is a pixel value (an intensity, a brightness value) in the time-series image $F_n$. I⁻ (in the expression, I and a macron (a bar) above I) is an average pixel value (an average intensity, an average brightness value) in the time-series image $F_n$.

By this template matching, the position of the moving body $P_n$ in the time-series image $F_n$, which is most approximated to the template image $Q_T$, is identified as a proper position $L_{Sn}$ (n=1 to N) of the moving body P in the time-series image $F_n$. In other words, the estimated position $L_n$ of the moving body $P_n$ in the time-series image $F_n$ is corrected to an identified position $L_{Sn}$ by the template matching. The identified position $L_{Sn}$ of the moving body $P_n$ is stored in the storage unit 32 (see Fig. 1).

In the present embodiment, the template image $Q_T$ is used as a comparison reference in template matching. As described above, the template image $Q_T$ is generated based on a so-called stacking method (superposition method) from extracted images $Q_n$ among time-series images $F_n$. Therefore, even if the shape of the moving body $P_n$ that is an object of comparison always changes because of an influence of fluctuation or the like, this change is hardly reflected on the shape of the moving body $P_T$ in the template image $Q_T$, whereas this change is strongly reflected on the shape that is common to the moving bodies $P_n$. Accordingly, the template image $Q_T$ has high reliability as a template, and it is possible to accurately identify the position $L_{Sn}$ of the moving body $P_n$ in the time-series image $F_n$. That is, according to the present embodiment, the moving body P can be detected accurately by a stacking method.

As described above, according to the present embodiment, the position Lsn of the moving body $P_n$ is identified (corrected) in each of the time-series images $F_n$. Therefore, by connecting the positions of the moving body P in the respective images to each other, it is possible to recognize the locus or the behavior of the moving body P that is an observation object. That is, even if a stacking method is used, fine information with regard to the position of the moving body P within an observation time can be obtained.

Each pixel value in the template image $Q_T$ may be a median or a mode of intensities (pixel values) of a corresponding pixel in extracted images $Q_n$ used for generation of the template image $Q_T$.

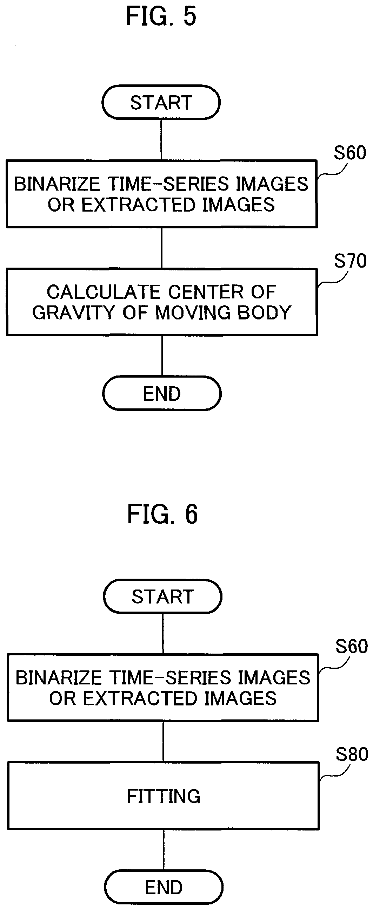

The moving body observation method according to the present embodiment may include the following process. Fig. 5 is a flowchart according to a first modification of the present embodiment. As illustrated in Fig. 5, the moving body observation method may include a binarizing step (Step S60) and a center-of-gravity calculating step (Step S70). Each of the steps is performed by the moving body observation device 10 illustrated in Fig. 1.

The binarizing step (Step S60) binarizes each pixel value in the time-series images $F_n$ (n=1 to N) or the extracted images $Q_n$ (n=1 to N) by using a predetermined threshold. As the threshold, a value that is a predetermined multiple of a value of background noise obtained from an observation history, for example, can be applied. The binarizing step (Step S60) obtains the binarized extracted images $Q_n$. The center-of-gravity calculating step (Step S70) calculates the center of gravity of the moving body $P_n$ in each time-series image $F_n$ or each extracted image $Q_n$, which has been binarized.

The template generating step (Step S40) in the first modification uses centers of gravity obtained in the center-of-gravity calculating step (Step S70) as reference points of the moving bodies $P_n$ when the extracted images $Q_n$ are

stacked on each other. That is, in the template generating step (Step S40), the extracted images $Q_n$ are stacked on each other to make the centers of gravity coincident with each other, thereby generating the template image $Q_T$. Thereafter, the position identifying step (Step S50) is performed using each of the binarized images.

Fig. 6 is a flowchart according to a second modification of the present embodiment. As illustrated in Fig. 6, the moving body observation method may include the binarizing step (Step S60) according to the first modification and a fitting step (Step S80). As in the first modification, each of the steps according to the second modification is also performed by the moving body observation device 10 illustrated in Fig. 1.

As described above, the extracted images $Q_n$ that have been binarized are obtained in the binarizing step (Step S60). The fitting step (Step S80) fits a normal function to two one-dimensional distributions obtained by integrating a pixel distribution of the moving body $P_n$ in each extracted image $Q_n$ that has been binarized in predetermined two directions. Accordingly, a position with the maximum brightness of the moving body $P_n$ (the maximum-brightness position) is calculated.

By the binarizing step (Step S60), pixels in the extracted image $Q_n$ are classified into pixels with a pixel value of 1, which represent the moving body $P_n$, and pixels with a pixel value of 0, which represent the background of the moving body $P_n$. Therefore, in the fitting step (Step S80), a one-dimensional distribution in the X direction obtained by integrating a two-dimensional distribution of these pixels in the Y direction is calculated, and a one-dimensional distribution in the Y direction obtained by integrating that two-dimensional distribution in the X direction is also calculated. The normal function is fitted to these two one-dimensional distributions, thereby calculating the position with the maximum brightness of the moving body $P_n$ (the maximum-brightness position).

The template generating step (Step S40) in the second modification uses maximum-brightness positions obtained in the fitting step (Step S80) as reference points of the moving bodies $P_n$ when the extracted images $Q_n$ are stacked on each other. That is, in the template generating step (Step S40), the extracted images $Q_n$ are stacked on each other to make the maximum-brightness positions coincident with each other, thereby generating the template image $Q_T$. Thereafter, the position identifying step (Step S50) is performed using each of the binarized images.

The present disclosure is not limited to the embodiment described above and is defined in the descriptions of the scope of claims, and the present disclosure includes all sorts of modifications with equivalent meanings and within the scope of the descriptions in the scope of claims.

## Claims

1. A moving body observation method comprising:

   acquiring time-series images taken at a predetermined time interval;
   obtaining an estimated position of a moving body in the time-series images based on an estimated motion of the moving body;
   extracting images each including the estimated position of the moving body from a plurality of images of the time-series images, as extracted images;
   generating a template image by stacking the extracted images in such a manner that reference points of the moving body in the extracted images coincide with each other; and
   identifying a position of the moving body in at least one image of the time-series images by performing template matching using the template image for the at least one image of the time-series images.

2. The moving body observation method according to claim 1, wherein each of the reference points of the moving body in stacking of the extracted images is the estimated position of the moving body.

3. The moving body observation method according to claim 2, wherein each pixel value in the template image is set to any one of an average pixel value, a median, and a mode of a corresponding pixel in the extracted images.

4. The moving body observation method according to claim 1, further comprising:

   binarizing each pixel value in the time-series images or the extracted images; and
   calculating a center of gravity of the moving body in each of the binarized time-series images or each of the binarized extracted images, wherein
   each of the reference points of the moving body in stacking of the extracted images is the center of gravity of the moving body.

5. The moving body observation method according to claim 1, further comprising:

binarizing each pixel value in the time-series images or the extracted images; and
calculating a maximum-brightness position of the moving body by fitting a normal function to two one-dimensional distributions obtained by integrating a pixel distribution of the moving body in each of the binarized extracted images in predetermined two directions, wherein
each of the reference points of the moving body in stacking of the extracted images is the maximum-brightness position of the moving body.

6. The moving body observation method according to claim 1, wherein the moving body is debris on an earth orbit or a microorganism in a liquid.

**Amended claims under Art. 19.1 PCT**

1. A moving body observation method comprising:

   acquiring time-series images taken at a predetermined time interval;
   obtaining an estimated position of a moving body in each of the time-series images based on an estimated motion of the moving body assumed in advance;
   extracting images each including the estimated position of the moving body from a plurality of images of the time-series images, as extracted images;
   generating a template image by stacking the extracted images in such a manner that reference points of the moving body in the extracted images coincide with each other; and
   identifying a position of the moving body in at least one image of the time-series images by performing template matching using the template image for the at least one image of the time-series images.

2. The moving body observation method according to claim 1, wherein each of the reference points of the moving body in stacking of the extracted images is the estimated position of the moving body.

3. The moving body observation method according to claim 2, wherein each pixel value in the template image is set to any one of an average pixel value, a median, and a mode of a corresponding pixel in the extracted images.

4. The moving body observation method according to claim 1, further comprising:

   binarizing each pixel value in the time-series images or the extracted images; and
   calculating a center of gravity of the moving body in each of the binarized time-series images or each of the binarized extracted images, wherein
   each of the reference points of the moving body in stacking of the extracted images is the center of gravity of the moving body.

5. The moving body observation method according to claim 1, further comprising:

   binarizing each pixel value in the time-series images or the extracted images; and
   calculating a maximum-brightness position of the moving body by fitting a normal function to two one-dimensional distributions obtained by integrating a pixel distribution of the moving body in each of the binarized extracted images in predetermined two directions, wherein
   each of the reference points of the moving body in stacking of the extracted images is the maximum-brightness position of the moving body.

6. The moving body observation method according to claim 1, wherein the moving body is debris on an earth orbit or a microorganism in a liquid.

# FIG. 1

# FIG. 2

START

ACQUIRE TIME-SERIES IMAGES ⟋ S10

OBTAIN ESTIMATED POSITIONS
OF MOVING BODY ⟋ S20

EXTRACT IMAGES INCLUDING
ESTIMATED POSITIONS
(GENERATE EXTRACTED IMAGES) ⟋ S30

GENERATE TEMPLATE IMAGE
BY STACKING EXTRACTED IMAGES ⟋ S40

IDENTIFY POSITION OF MOVING BODY
BY TEMPLATE MATCHING ⟋ S50

END

# FIG. 3

# FIG. 4

(a)

$P(P_n)$

PIXEL VALUE (INTENSITY)

Y DIRECTION

X DIRECTION

INTENSITY DISTRIBUTION IN EXTRACTED IMAGE $Q_n$

(b)

$P(P_T)$

PIXEL VALUE (INTENSITY)

Y DIRECTION

X DIRECTION

INTENSITY DISTRIBUTION IN TEMPLATE IMAGE $Q_T$

# FIG. 5

START

BINARIZE TIME-SERIES IMAGES OR EXTRACTED IMAGES — S60

CALCULATE CENTER OF GRAVITY OF MOVING BODY — S70

END

# FIG. 6

START

BINARIZE TIME-SERIES IMAGES OR EXTRACTED IMAGES — S60

FITTING — S80

END

## INTERNATIONAL SEARCH REPORT

| International application No. |
| --- |
| PCT/JP2017/045949 |

| A. CLASSIFICATION OF SUBJECT MATTER |
| --- |
| Int.Cl. G06T7/00(2017.01)i, G01C11/06(2006.01)i, G06T7/246(2017.01)i, H04N5/232(2006.01)i |
| According to International Patent Classification (IPC) or to both national classification and IPC |

| B. FIELDS SEARCHED |
| --- |
| Minimum documentation searched (classification system followed by classification symbols) |
| Int.Cl. G06T7/00, G01C11/06, G06T7/246, H04N5/232 |

| Documentation searched other than minimum documentation to the extent that such documents are included in the fields searched |
| --- |
| Published examined utility model applications of Japan 1922–1996<br>Published unexamined utility model applications of Japan 1971–2018<br>Registered utility model specifications of Japan 1996–2018<br>Published registered utility model applications of Japan 1994–2018 |

| Electronic data base consulted during the international search (name of data base and, where practicable, search terms used) |
| --- |
| |

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2008-113071 A (MATSUSHITA ELECTRIC WORKS, LTD.)<br>15 May 2008, paragraphs [0039]-[0093], fig. 1-3<br>& US 2008/0100709 A1, paragraphs [0046]-[0058],<br>[0069]-[0071], fig. 1-7 & EP 1916538 A2 & CN<br>101170683 A & TW 200820099 A | 1, 4<br>6<br>2-3, 5 |
| Y | JP 2012-56517 A (IHI CORPORATION) 22 March 2012,<br>paragraphs [0029], [0030], [0086], fig. 1<br>& US 2013/0170707 A1, paragraphs [0031], [0032],<br>[0096], fig. 1 & WO 2012/033159 A1 & EP 2615582 A1<br>& AU 2011299821 A & CA 2810795 A1 & RU 2013115416<br>A | 6 |

☒ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 05.02.2018 | 13.02.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2017/045949

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2014-102608 A (IHI CORPORATION) 05 June 2014, paragraphs [0024], [0025] & US 2015/0235380 A1, paragraphs [0032], [0033] & WO 2014/077272 A1 & EP 2922023 A1 & CA 2890717 A1 & RU 2015123211 A | 6 |
| Y | JP 2004-205366 A (JAPAN SCIENCE AND TECH AGENCY) 22 July 2004, paragraph [0038] & WO 2004/059244 A1 | 6 |
| Y | JP 2001-22929 A (MEIDENSHA CORPORATION) 26 January 2001, paragraphs [0003]-[0009] (Family: none) | 6 |

Form PCT/ISA/210 (continuation of second sheet) (January 2015)

**EP 3 640 887 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014051211 A